# EUROPEAN PATENT SPECIFICATION

(11) **EP 4 527 257 B1**
(45) Date of publication and mention of the grant of the patent: **26.11.2025**
(21) Application number: 24198766.8
(22) Date of filing: 05.09.2024
(51) Int. Cl.: A47G 19/22, A47J 41/02, B65D 51/24, B65D 55/02

(54) **CAP UNIT AND CAPPED CONTAINER**
KAPPENEINHEIT UND BEHÄLTER MIT VERSCHLUSSKAPPE
UNITÉ DE BOUCHON ET RÉCIPIENT AVEC BOUCHON

(30) Priority: 14.09.2023 JP 2023148919
(43) Date of publication of application: 26.03.2025
(73) Proprietor: Thermos L.L.C., Schaumburg, IL 60173 (US); Thermos K.K., Tsubame-shi, Niigata-ken (JP)
(72) Inventor: YABE, Shintaro, Niigata-ken (JP); MURATA, Takeshi, Niigata-ken (JP)
(74) Representative: Barker Brettell LLP

(56) References cited:
- WO-A1-2020/227752
- JP-A- 2015 013 675
- US-A1- 2013 319 966
- US-B2- 9 079 205

## Description

### Technical Field

This invention relates to a cap unit and a capped container.

### Background Art

Conventionally, capped containers have existed that are equipped with a cap unit which can be detachably attached to the container body with an upper opening. A capped container is known from WO2020227752A1.

Moreover, some cap units include: a cap body that closes the upper opening of the container body and has an opening at the top; a mouth forming member attached around the opening of the cap body and provided with a liquid outlet that communicates with the inside of the container body; and a mouth detachment mechanism that detachably attaches the mouth forming member around the opening of the cap body (see, for example, Patent Document 1 below).

The mouth detachment mechanism has a locking member slidably attached to the cap body, along with a biasing member that biases the locking member toward one side in the sliding direction. In the mouth detachment mechanism, the locking state of the mouth forming member relative to the cap body is released by sliding the locking member toward the other side in the sliding direction against the biasing force of the biasing member. This allows the mouth forming member to be detached from around the opening of the cap body.

A patent document in the technological field includes Japanese Patent Application Publication No. 2015-013675 (document 1).

However, in the conventional cap units described above, when the cap unit is attached to the container body, the locking state of the mouth forming member relative to the cap body may be released upon an erroneous sliding operation of the locking member, causing the cap body to come off from the container body.

That is, conventional mouth detachment mechanisms do not provide a locking mechanism for preventing a locking member from sliding upon an erroneous sliding operation of the locking member, so the usability thereof is not necessarily good.

In contrast, the addition of the abovementioned locking mechanism problematically increases the number of parts, complicates the structure, and increases the size of the product.

The present invention has been created in view of the abovementioned problems, with the object of providing a cap unit that makes it possible to prevent the locking member from sliding in the mouth detachment mechanism upon an erroneous sliding operation of the locking member while having a space-saving and simple structure, along with a capped container equipped with such a cap unit, thereby further improving usability.

In order to achieve the abovementioned purpose, the present invention provides the following means.
[1] A cap unit detachably attached to a container body with an upper opening, comprising:
   a cap body that closes the upper opening of the container body and has an opening at the top;
   a mouth forming member attached around the opening of the cap body and provided with a liquid outlet that communicates with the inside of the container body; and
   a mouth detachment mechanism that detachably attaches the mouth forming member around the opening of the cap body,
   characterized in that
   the mouth detachment mechanism has a locking member slidably attached to the cap body, along with a biasing member that biases the locking member toward one side in the sliding direction, wherein, in a state in which the cap body is detached from the container body, the locking state of the mouth forming member relative to the cap body is released by sliding the locking member toward the other side in the sliding direction against the biasing force of the biasing member, allowing the mouth forming member to be detached from around the opening of the cap body, and
   wherein, in a state in which the cap body is attached to the container body, sliding of the locking member toward the other side is prevented by a part of the locking member abutting the container body during the sliding operation of the locking member.
[2] The cap unit according to [1], wherein the locking member has an operation part facing the upper surface of the cap body and a cover part covering the lower surface inside the cap body, including the biasing member, and wherein the part of the locking member is the cover part.
[3] The cap unit according to [2], wherein the operation part is positioned inside a cutout recess that is cut out around the opening of the cap body.
[4] The cap unit according to [1], wherein the cap body has a pair of guide parts and a pair of stopper parts on the lower surface inside the cap body, and
   wherein the locking member has a pair of fitting parts slidably fitted to the pair of guide parts and a pair of retaining parts that abut the pair of stopper parts on one side in the sliding direction.
[5] The cap unit according to [1], wherein the cap body has an upper wall part in which the opening is formed, a stepped part that recesses around the opening of the upper wall part, and a cutout recess that cuts out a part of the stepped part along the sliding direction of the locking member, and
   wherein the locking member is positioned inside the cutout recess and has an operation part facing the upper surface of the cap body from the stepped part.
[6] A capped container comprising: the cap unit according to any one of [1] to [5]; and
   a container body to which the cap unit is attached.

As described above, according to the present invention, a cap unit is provided that makes it possible to prevent the locking member from sliding in the mouth detachment mechanism upon an erroneous sliding operation of the locking member while having a space-saving and simple structure, along with a capped container equipped with such a cap unit, thereby further improving usability.

### Brief Description of Drawings

Fig. 1 is a perspective view illustrating the appearance of a capped container with a cap unit according to one embodiment of the present invention.
Fig. 2 is a perspective view illustrating the state in which the lid of the cap unit illustrated in Fig. 1 is in the closed position.
Fig. 3 is a perspective view illustrating the state in which the lid of the cap unit illustrated in Fig. 1 is in the open position.
Fig. 4 is a cross-sectional view illustrating the state in which the lid of the cap unit illustrated in Fig. 1 is in the closed position.
Fig. 5 is a cross-sectional view illustrating the state in which the lid of the cap unit illustrated in Fig. 1 is in the open position.
Fig. 6 is a cross-sectional view illustrating the state in which the locking member is prevented from sliding against the sliding operation of the locking member in the mouth detachment mechanism of the cap unit illustrated in Fig. 1.
Fig. 7 is a perspective view illustrating the state in which the mouth forming member is detached from the opening of the cap body in the mouth detachment mechanism of the cap unit illustrated in Fig. 1.
Fig. 8 is a cross-sectional perspective view of the cap unit taken along line A-A illustrated in Fig. 7.
Fig. 9 is a perspective view of the cap unit illustrated in Fig. 1 viewed from the lower side.
Fig. 10(A) is a perspective view of the locking member viewed from the front side, while (B) is a perspective view of the locking member viewed from the rear side.
Fig. 11 is a cross-sectional perspective view illustrating the state in which the locking member is in the lock position in the mouth detachment mechanism of the cap unit illustrated in Fig. 1.
Fig. 12 is a cross-sectional perspective view illustrating the state in which the locking member is in the unlock position in the mouth detachment mechanism of the cap unit illustrated in Fig. 1.
Fig. 13 is a cross-sectional view illustrating the state in which the locking member is in the lock position in the mouth detachment mechanism of the cap unit illustrated in Fig. 1.
Fig. 14 is a cross-sectional view illustrating the state in which the locking member is in the unlock position in the mouth detachment mechanism of the cap unit illustrated in Fig. 1.
Fig. 15 is a cross-sectional view illustrating the state in which the mouth forming member is detached from the opening of the cap body in the mouth detachment mechanism of the cap unit illustrated in Fig. 1.
Fig. 16 is a cross-sectional perspective view of the lid with the lid packing attached thereto.
Fig. 17(A) is a perspective view of the lid packing viewed from the upper side, while (B) is a cross-sectional view of the lid packing.

### Description of Embodiments

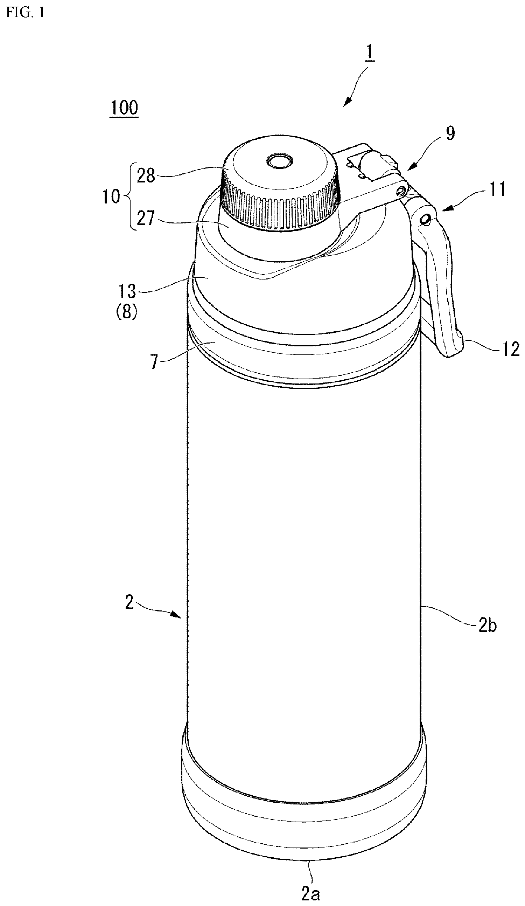

Hereinafter, the embodiments of the present invention will be described in detail with reference to the drawings.
As an embodiment of the present invention, for example, a capped container 100 equipped with a cap unit 1 as illustrated in Figs. 1 to 17 will be described.

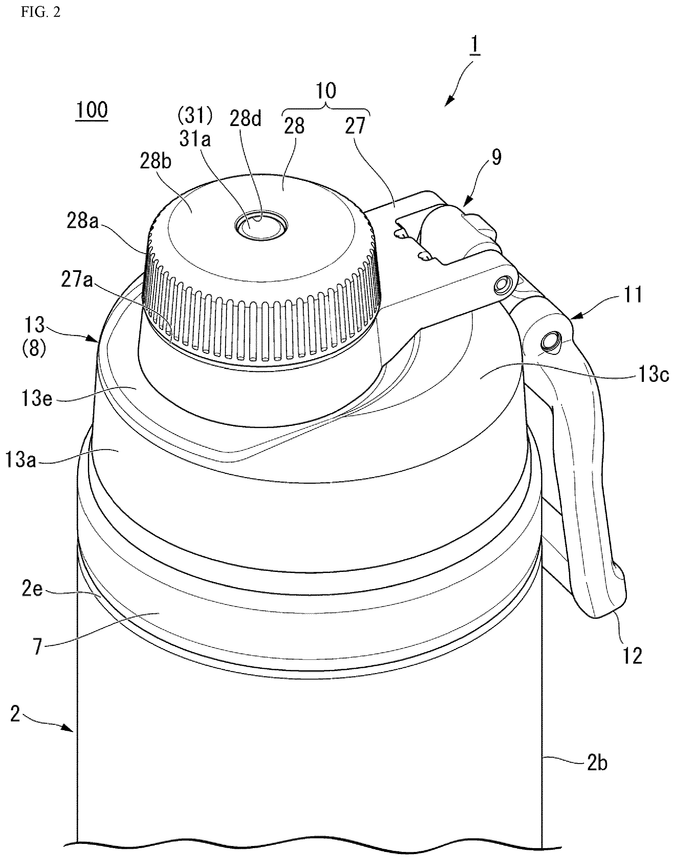

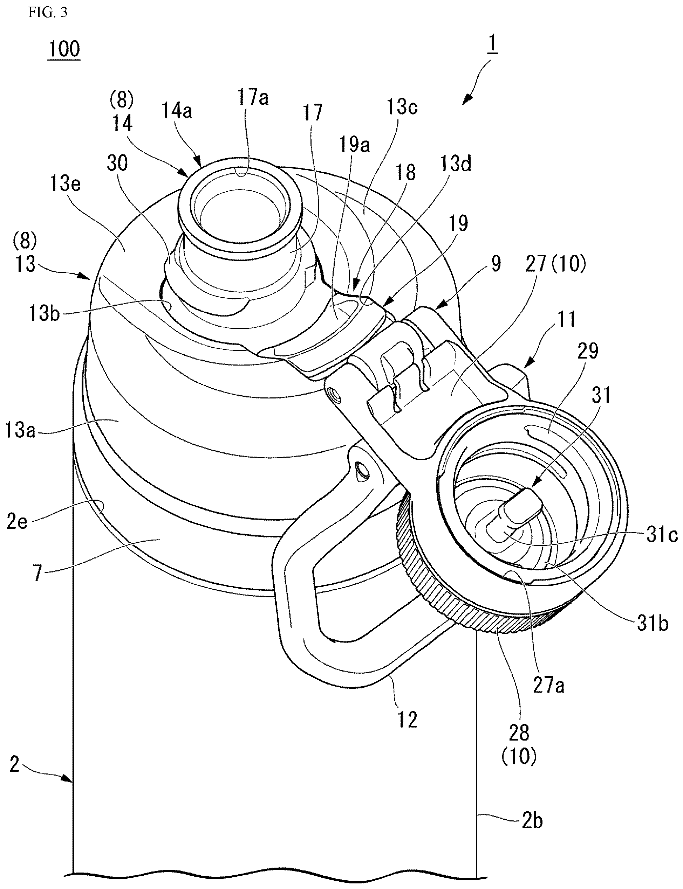

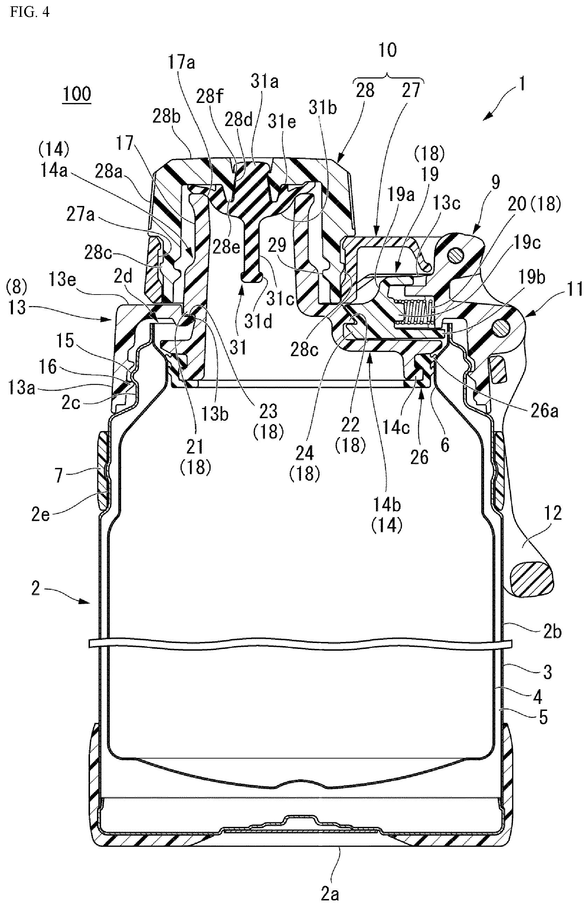

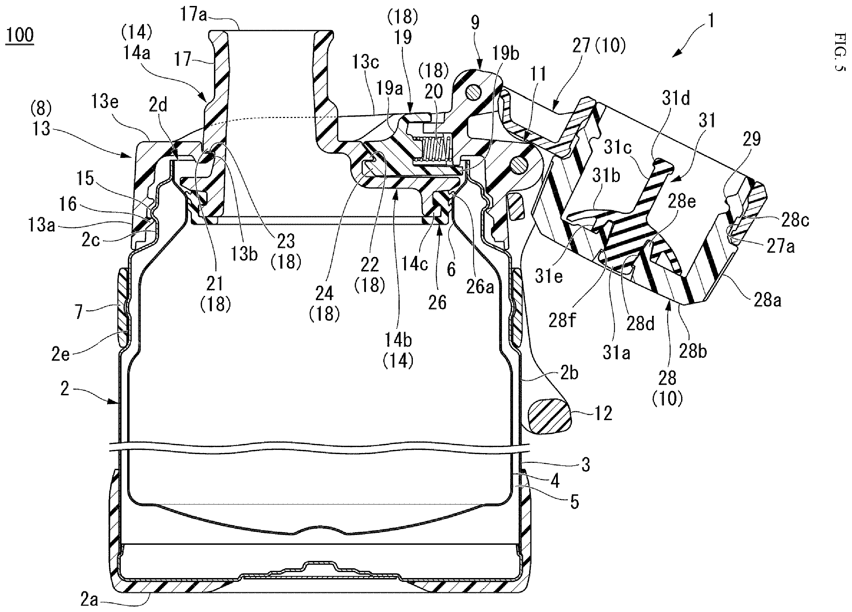

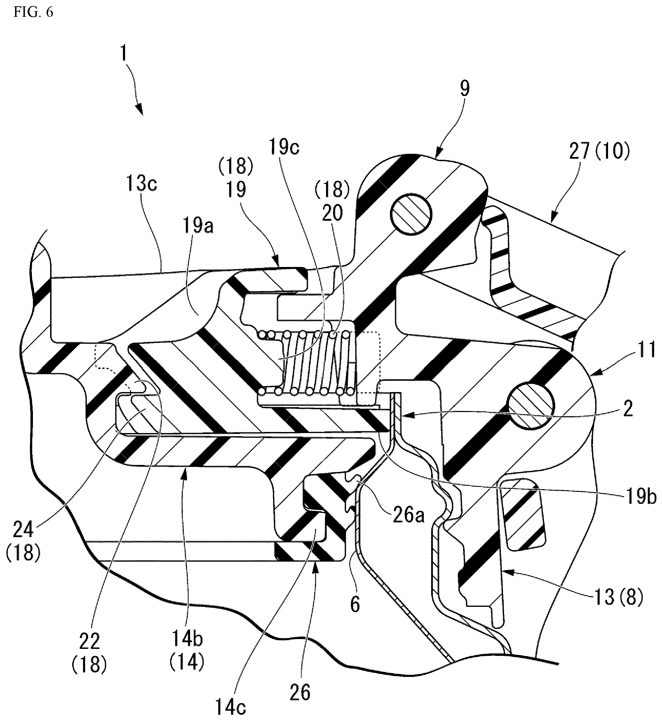

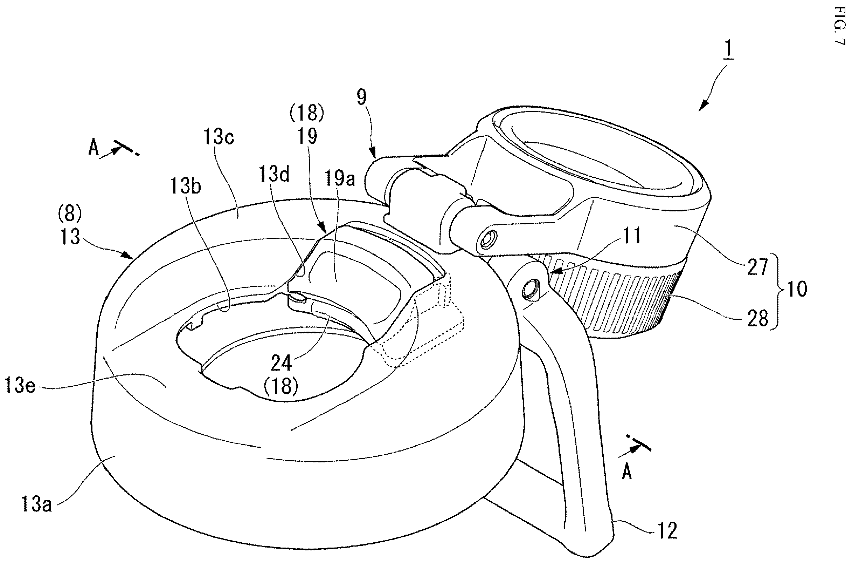

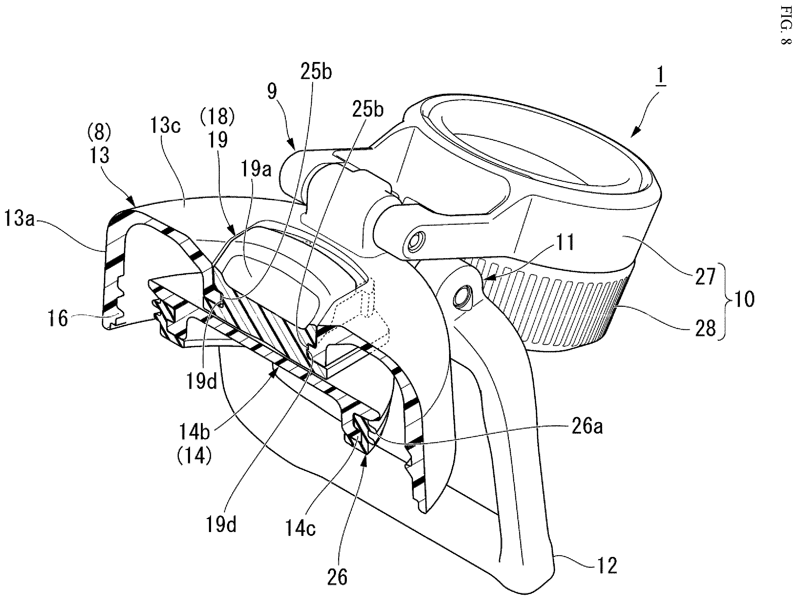

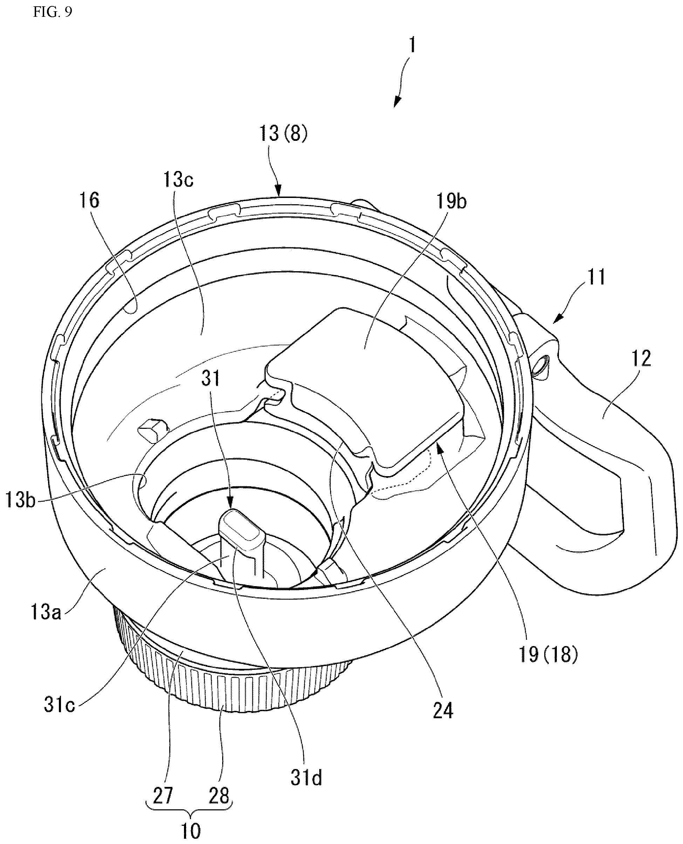

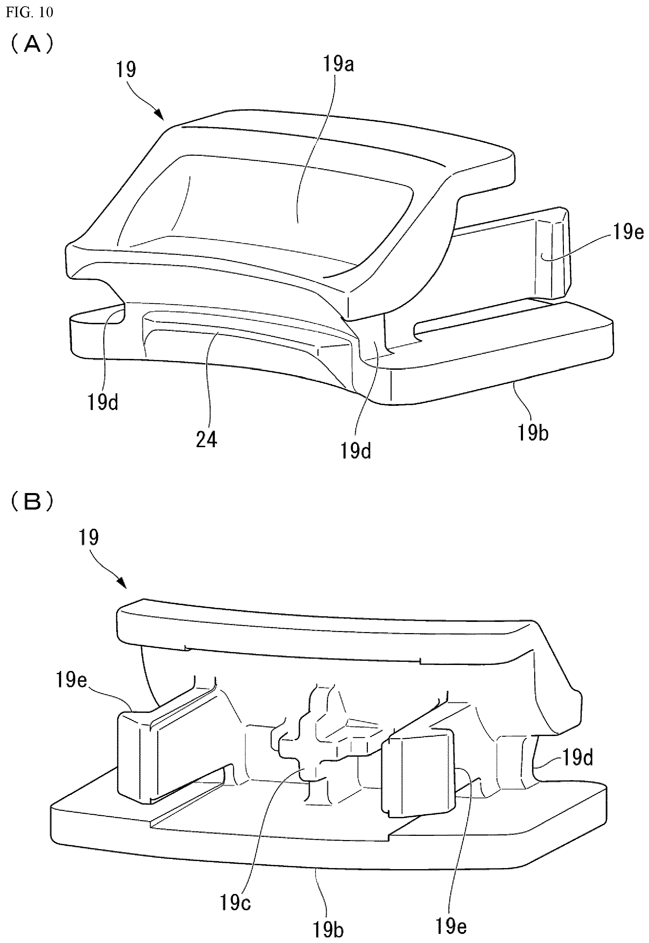

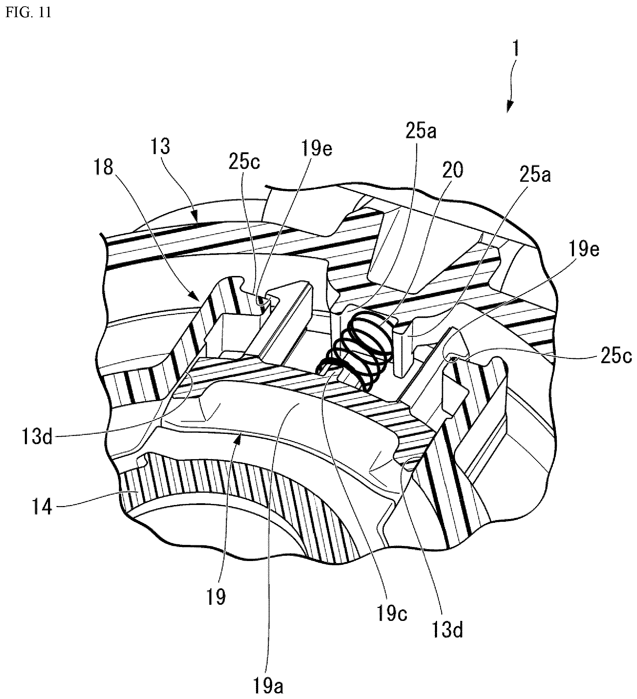

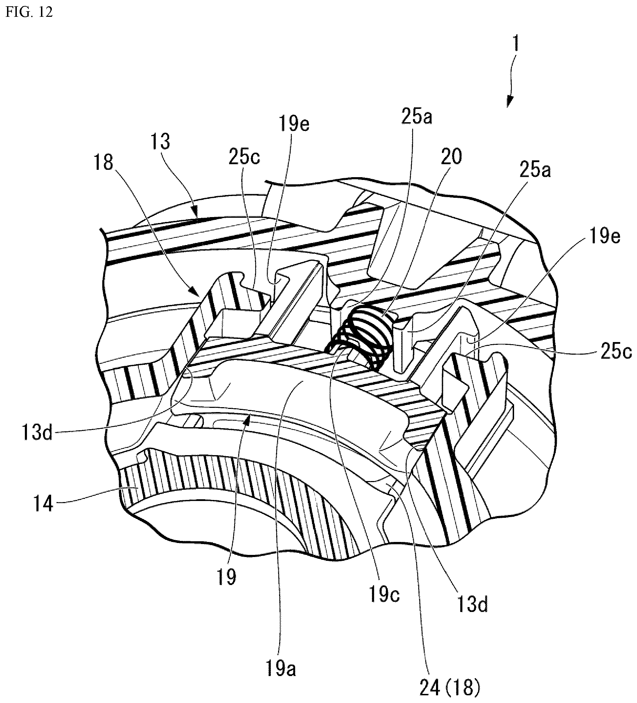

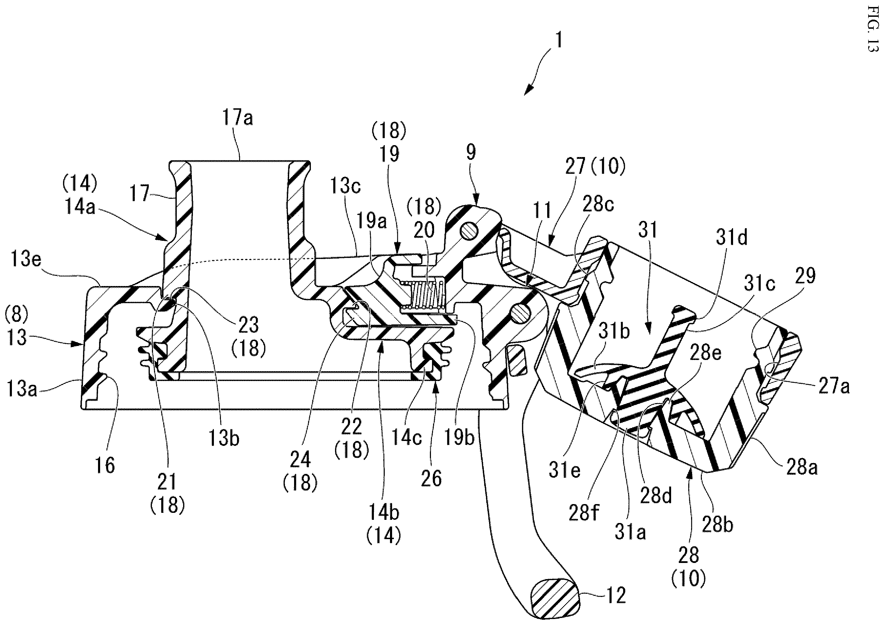

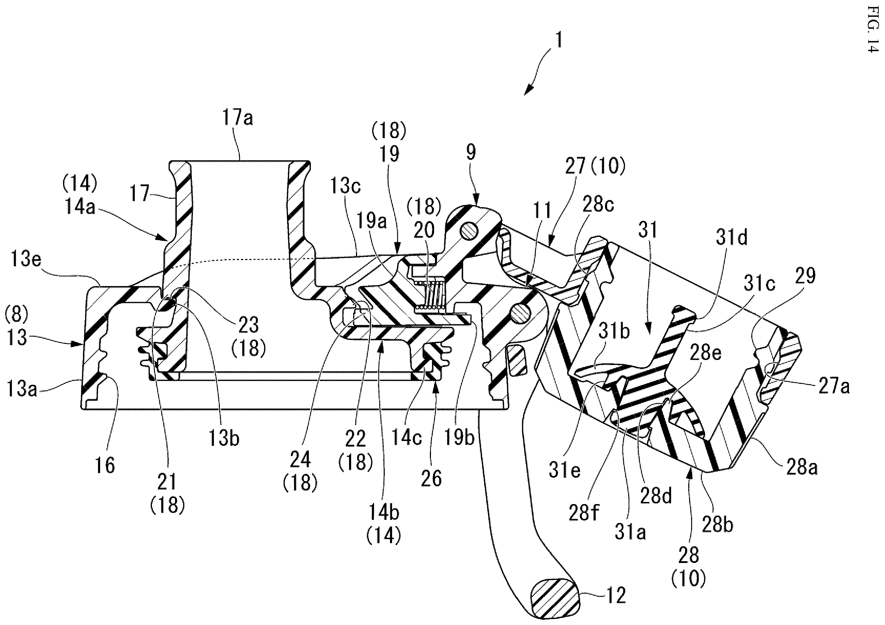

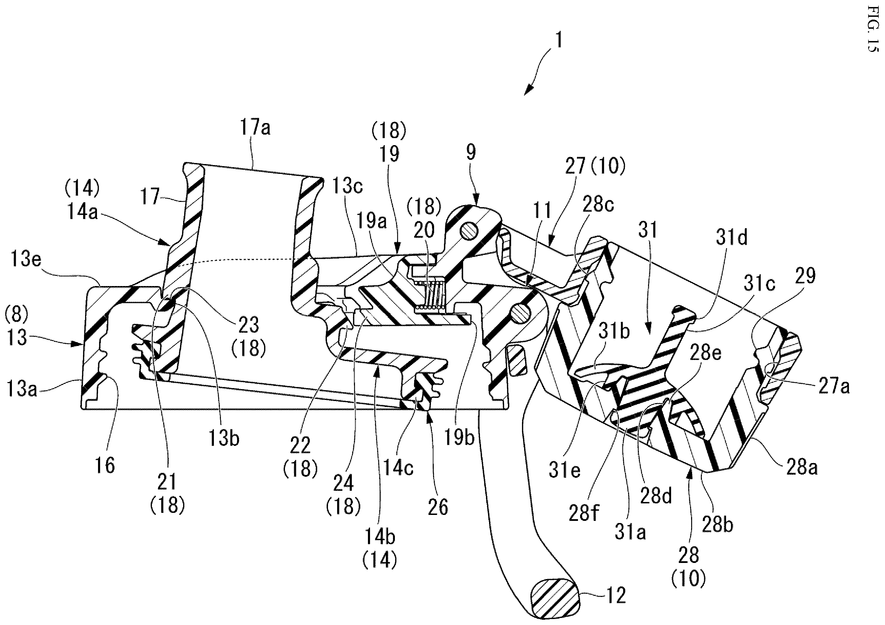

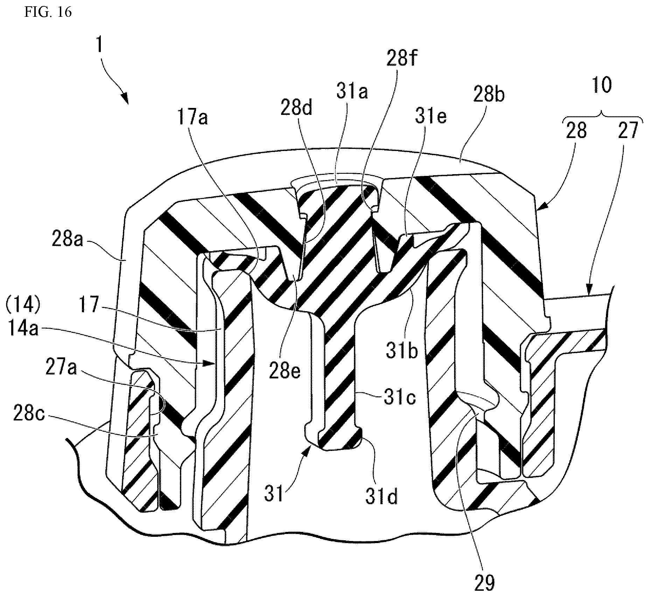

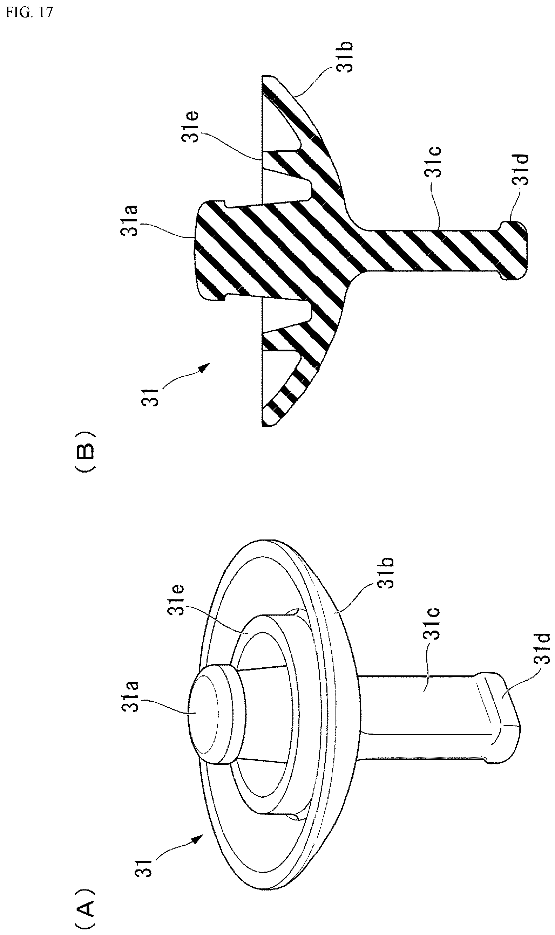

Note that Fig. 1 is a perspective view illustrating the appearance of a capped container 100 with a cap unit 1. Fig. 2 is a perspective view illustrating the state in which the lid 10 of the cap unit 1 is in the closed position. Fig. 3 is a perspective view illustrating the state in which the lid 10 of the cap unit 1 is in the open position. Fig. 4 is a cross-sectional view illustrating the state in which the lid 10 of the cap unit 1 is in the closed position. Fig. 5 is a cross-sectional view illustrating the state in which the lid 10 of the cap unit 1 is in the open position. Fig. 6 is a cross-sectional view illustrating the state in which the locking member 19 is prevented from sliding against the sliding operation of the locking member 19 in the mouth detachment mechanism 18 of the cap unit 1. Fig. 7 is a perspective view illustrating the state in which the mouth forming member 14 is detached from the opening 13b of the cap body 8 in the mouth detachment mechanism 18 of the cap unit 1. Fig. 8 is a cross-sectional perspective view of the cap unit 1 taken along line A-A illustrated in Fig. 7. Fig. 9 is a perspective view of the cap unit 1 viewed from the lower side. Fig. 10(A) is a perspective view of the locking member 19 viewed from the front side. Fig. 10(B) is a perspective view of the locking member 19 viewed from the rear side. Fig. 11 is a cross-sectional perspective view illustrating the state in which the locking member 19 is in the lock position in the mouth detachment mechanism 18 of the cap unit 1. Fig. 12 is a cross-sectional perspective view illustrating the state in which the locking member 19 is in the unlock position in the mouth detachment mechanism 18 of the cap unit 1. Fig. 13 is a cross-sectional view illustrating the state in which the locking member 19 is in the lock position in the mouth detachment mechanism 18 of the cap unit 1. Fig. 14 is a cross-sectional view illustrating the state in which the locking member 19 is in the unlock position in the mouth detachment mechanism 18 of the cap unit 1. Fig. 15 is a cross-sectional view illustrating the state in which the mouth forming member 14 is detached from the opening 13b of the cap body 8 in the mouth detachment mechanism 18 of the cap unit 1. Fig. 16 is a cross-sectional perspective view of the lid 10 with the lid packing 31 attached thereto. Fig. 17(A) is a perspective view of the lid packing 31 viewed from the upper side. Fig. 17(B) is a cross-sectional view of the lid packing 31.

As illustrated in Figs. 1 to 6, the capped container 100 of the present embodiment includes the cap unit 1 of the present embodiment and a container body 2 to which the cap unit 1 is detachably attached.

The capped container 100 is a beverage container capable of keeping a beverage (liquid) housed in the container body 2 cool (or warm) by means of the container body 2, which has a vacuum insulation structure.

Specifically, the container body 2, for example, has a bottomed cylindrical outer container 3 and an inner container 4 made of stainless steel, etc., and is configured as a double-structured container in which the mouth portions of the outer container 3 and the inner container 4 are joined together with the inner container 4 housed inside the outer container 3.

Moreover, a vacuum insulation layer 5 is provided between the outer container 3 and the inner container 4. The vacuum insulation layer 5 can be formed by sealing the degassing hole provided at the bottom of the outer container 3 in a chamber depressurized (evacuated) to a high vacuum, for example.

The container body 2 has a substantially circular bottom 2a, a substantially cylindrical body 2b rising from the outer periphery of the bottom 2a, and a substantially cylindrical mouth neck 2c with a reduced diameter at the upper side of the body 2b.

The upper end of the mouth neck 2c is circularly open as the upper opening 2d of the container body 2. Furthermore, the inner peripheral surface of the mouth neck 2c (upper side of the body 2b) has a smaller diameter than the inner peripheral surface of the body 2b. Additionally, a ring-shaped extension 6 is provided all around the lower side of the inner peripheral surface of the mouth neck 2c (below the reduced diameter portion on the upper side of the body 2b).

Moreover, a shoulder member 7 is attached all around the lower side of the mouth neck 2c on the upper side of the body 2b. The shoulder member 7 is made of, for example, a cylindrical resin member and is fitted all around the stepped part 2e with a reduced diameter on the upper side of the body 2b so as to be substantially flush with the outer peripheral surface of the body 2b.

Although the capped container 100 of the present embodiment has a substantially cylindrical overall external shape, the external shape of the capped container 100 is not particularly limited, so appropriate changes can be made according to size and design, etc. The outer peripheral surface of the container body 2 may also be painted, printed, etc.

The cap unit 1 of the present embodiment includes a cap body 8 that closes the upper opening 2d of the container body 2 described above, a lid 10 rotatably attached to the cap body 8 via a first hinge part 9, and a handle member 12 rotatably attached to the cap body 8 via a second hinge part 11.

Note that in the following description, the side on which the lid 10 is attached to the cap body 8 via the first hinge part 9 is referred to as the "rear side (back side)" of the cap unit 1 (capped container 100), while the opposite side is referred to as the "front side (front side)" of the cap unit 1 (capped container 100), with the direction connecting them being described as the front-rear direction.

Furthermore, in Fig. 1, the side on which the lid 10 is positioned relative to the container body 2 is referred to as the "upper side," while the direction in which the container body 2 is positioned relative to the lid 10 is referred to as the "lower side," with the direction connecting them being described as the vertical direction. Furthermore, the direction orthogonal to the vertical direction is referred to as the radial direction, while the direction orthogonal to the front-back direction in the radial direction is referred to as the left-right direction.

As illustrated in Figs. 2 to 6, the cap body 8 has an outer cylinder member 13 and a mouth forming member 14 made of, for example, heat-resistant resin.

The outer cylinder member 13 has a substantially cylindrical peripheral wall part 13a formed so as to be continuous with the body 2b of the container body 2, along with an upper wall part 13c in which an opening 13b, a perforated hole with a smaller diameter than the peripheral wall part 13a, is formed on the upper side of the peripheral wall part 13a.

The outer cylinder member 13 (cap body 8) is detachably attached to the mouth neck 2c of the container body 2 by screwing. Consequently, a first male screw part 15 is provided on the outer peripheral surface (upper side of the body 2b) of the mouth neck 2c. At the same time, a first female screw part 16 that engages with the first male screw part 15 is provided on the inner peripheral surface of the peripheral wall part 13a of the outer cylinder member 13 (cap body 8).

As illustrated in Figs. 4 to 8, the mouth forming member 14 has an upper mouth forming part 14a forming the upper side of the opening 13b of the outer cylinder member 13, along with a lower mouth forming part 14b forming the lower side of the opening 13b of the outer cylinder member 13.

The upper mouth forming part 14a has a nozzle part 17 protruding upward in a substantially cylindrical shape. The tip of the nozzle part 17 is provided with a circular liquid outlet 17a that communicates with the inside of the container body 2 as a drinking or pouring mouth.

In other words, the cap body 8, in a state attached to the mouth neck 2c of the container body 2, closes the upper opening 2d of the container body 2 and communicates the inside and outside of the container body 2 through the nozzle part 17 (liquid outlet 17a).

The lower mouth forming part 14b is provided so as to protrude downward in a substantially cylindrical shape from the lower side of the upper mouth forming part 14a as a part to be fitted into the inside of the container body 2 from the upper opening 2d of the container body 2.

The mouth forming member 14 is detachably attached around the opening 13b of the outer cylinder member 13 via a mouth detachment mechanism 18 as illustrated in Figs. 4 to 15.

Specifically, the mouth detachment mechanism 18 has a locking member 19 slidably attached to the outer cylinder member 13 (cap body 8) in the front-rear direction, a biasing member 20 that biases the locking member 19 toward one side (front side) in the sliding direction, a first locking part 21 positioned on the opposite side (front side) of the mouth forming member 14 opposite the locking member 19, a second locking part 22 positioned on the opposite side (rear side) of the mouth forming member 14 opposite the locking member 19, a first locked part 23 positioned on the front side around the opening 13b of the outer cylinder member 13 (cap body 8), and a second locked part 24 positioned on one side (front side) in the sliding direction of the locking member 19.

As illustrated in Figs. 7 to 9 and Figs. 10 (A), (B), the locking member 19 is made of, for example, a heat-resistant resin and has an operation part 19a, a cover part 19b, a spring receiving part 19c, a pair of fitting parts 19d, and a pair of retaining parts 19e.

The operation part 19a is positioned on the upper side of the locking member 19 and has a recessed shape to facilitate the sliding operation of the locking member 19 by finger. Note that the operation part 19a is not limited to this shape and can be appropriately modified.

In contrast, a cutout recess 13d for housing the locking member 19 is provided on the upper side of the cap body 8 (the upper wall part 13c of the outer cylinder member 13).

The cutout recess 13d is positioned on the side (rear side of the cap body 8) on which the first hinge part 9 is located around the opening 13b of the upper wall part 13c (cap body 8) and is formed along the sliding direction (front-rear direction of the cap body 8) of the locking member 19.

The locking member 19 is positioned inside this cutout recess 13d, while the operation part 19a is provided facing the upper side of the cap body 8.

Furthermore, a stepped part 13e recessed toward the side opposite the first hinge part 9 (front side of the cap body 8) around the opening 13b of the upper wall part 13c (cap body 8) is provided on the upper side of the cap body 8 (the upper wall part 13c of the outer cylinder member 13). Thus, the cutout recess 13d is provided to cut out part of the stepped part 13e (rear side of the cap body 8).

In the mouth detachment mechanism 18, the operation part 19a of the locking member 19 facing outward from the cutout recess 13d is provided inclining upward toward the rear side of the cap body 8 along the slope of the stepped part 13e. This makes it easier to slide the operation part 19a of the locking member 19 facing outward from the cutout recess 13d toward the other side (rear side) in the sliding direction by finger.

Furthermore, as illustrated in Fig. 7, the upper side of the locking member 19 is substantially flush with the upper side of the cap body 8, which consists of the upper wall part 13c of the outer cylinder member 13 and the stepped part 13e. Thus, even when the lid 10 is in the closed position, the lid 10 and the locking member 19 do not interfere with each other, allowing the cap unit 1 to have a space-saving simple configuration. Moreover, the operation part 19a of the locking member 19 is easy to operate, so it can provide an integrated aesthetic.

The cover part 19b is positioned on the lower side of the locking member 19, exposed on the lower side to cover the inner lower surface (lower surface of the upper wall part 13c) of the cap body 8, including the biasing member 20, and is formed in a substantially rectangular flat plate shape.

The spring receiving part 19c is configured by a protruding part projecting rearward from the central part of the rear side of the operation part 19a.

The pair of fitting parts 19d are located on both sides in the left-right direction of the locking member 19 and are formed by guide grooves recessed inward in the left-right direction extending in the front-rear direction between the operation part 19a and the cover part 19b.

The pair of retaining parts 19e are located on both sides in the left-right direction with the spring receiving part 19c therebetween, projecting rearward from the rear side of the operation part 19a, and are formed by a hook part with its tip projecting outward.

In contrast, as illustrated in Figs. 7 to 9, 11, and 12, the cap body 8 has a spring receiving part 25a, a pair of guide parts 25b, and a pair of stopper parts 25c on the inner lower surface (lower surface of the upper wall part 13c) of the outer cylinder member 13.

The spring receiving part 25a is positioned on the tip side of the part protruding forward from the central part of the rear side of the cutout recess 13d and is formed by a pair of protrusions projecting forward from both sides in the left-right direction.

The pair of guide parts 25b are located on both sides in the left-right direction of the cutout recess 13d, extending in the front-rear direction from the lower end of the cutout recess 13d, and are formed by guide protrusions projecting inward in the left-right direction.

The locking member 19 is slidably attached in the front-rear direction inside the cutout recess 13d by fitting the pair of guide parts 25b into the pair of fitting parts 19d.

The pair of stopper parts 25c are located on both sides in the left-right direction of the cutout recess 13d and are formed by claw parts projecting inward from the rear side surface of the cutout recess 13d.

The locking member 19 is retained inside the cutout recess 13d by the pair of retaining parts 19e abutting the pair of stopper parts 25c on one side (front side) in the sliding direction.

As illustrated in Figs. 11 and 12, the biasing member 20 is made of, for example, a coil spring and is disposed between one spring receiving part 25a on the side of the outer cylinder member 13 (cap body 8) and the other spring receiving part 19c on the side of the locking member 19, constantly biasing the locking member 19 toward one side (front side).

The locking member 19 is biased to one side (front side) in the sliding direction by this biasing member 20, causing the pair of retaining parts 19e to abut the pair of stopper parts 25c and be retained inside the cutout recess 13d toward the front side.

In contrast, the locking member 19 can be slid to the other side (rear side), that is, toward the side of the first hinge part 9, by pressing against the biasing force of the biasing member 20.

Note that the biasing member 20 can also be made of elastic materials such as rubber or elastomer instead of the abovementioned coil spring or other spring members.

As illustrated in Figs. 13 to 15, the first locking part 21 is positioned at the boundary between the upper mouth forming part 14a and the lower mouth forming part 14b of the mouth forming member 14 and is formed by a claw part projecting forward from the front side of the mouth forming member 14.

The second locking part 22 is positioned at the boundary between the upper mouth forming part 14a and the lower mouth forming part 14b of the mouth forming member 14 and is formed by a claw part projecting rearward from the rear side of the mouth forming member 14.

The first locked part 23 is formed by a stepped part that includes a recessed part of the front side along the opening 13b of the upper wall part 13c (stepped part 13e).

The second locked part 24 is formed by a claw part projecting forward from below the operation part 19a on the front side of the locking member 19.

In the mouth detachment mechanism 18, first, as illustrated in Fig. 15, the first locking part 21 is engaged with the first locked part 23 while fitting the upper mouth forming part 14a of the mouth forming member 14 from the lower side into the inside of the opening 13b of the outer cylinder member 13 (cap body 8).

Subsequently, by pushing the rear side of the mouth forming member 14 upward, the second locking part 22 pushes the locking member 19 upward while resisting the biasing force of the biasing member 20 and moving upward.

Next, as illustrated in Fig. 13, the locking member 19 slides to the lock position on one side (front side) in the sliding direction via the biasing force of the biasing member 20, engaging the second locking part 22 with the second locked part 24. Thus, it becomes possible to attach the mouth forming member 14 around the opening 13b of the outer cylinder member 13 (cap body 8).

In contrast, in the mouth detachment mechanism 18, from the state illustrated in Fig. 13, as illustrated in Fig. 14, the locking member 19 is slid from the lock position on one side (front side) in the sliding direction to the unlock position on the other side (rear side) by sliding against the biasing force of the biasing member 20.

Thus, as illustrated in Fig. 15, the locked state of the mouth forming member 14 relative to the outer cylinder member 13 (cap body 8) can be released and the mouth forming member 14 can be removed downward from around the opening 13b of the outer cylinder member 13 (cap body 8).

As illustrated in Figs. 4 and 5, the mouth forming member 14 is detachably attached with a water stop packing 26.

The water stop packing 26 is a ring-shaped sealing member for sealing between the extension 6 (container body 2) and the mouth forming member 14 (cap body 8), made of an elastic material such as heat-resistant rubber or elastomer, for example, silicone rubber.

The water stop packing 26 is fitted to the outer peripheral part of the lower flange part 14c provided on the outer peripheral part of the lower side of the lower mouth forming part 14b (mouth forming member 14).

Additionally, two elastic flange parts 26a are provided on the outer peripheral surface of the water stop packing 26, protruding in the radial direction all around.

When the cap unit 1 is attached to the container body 2 to close the upper opening 2d, the water stop packing 26 is fitted into the container body 2 with the lower mouth forming part 14b (mouth forming member 14), so the elastic flange parts 26a elastically deform and adhere closely to the extension 6 all around.

This enables sealing (water-stopping) between the extension 6 (container body 2) and the mouth forming member 14 (cap body 8) via the water stop packing 26.

In contrast, the water stop packing 26 can be removed from the lower flange part 14c (mouth forming member 14) by elastically deforming (stretching) itself.

Thus, the water stop packing 26 and the mouth forming member 14 can be washed separately, maintaining hygiene between the water stop packing 26 and the mouth forming member 14.

Note that the water stop packing 26 is not necessarily limited to the above shape, so, for example, the number of elastic flange parts 26a is not limited to the two described above, but can be one or three or more. Additionally, the water stop packing 26 is not necessarily limited to the configuration with the elastic flange parts 26a as described above, with the shape and other aspects thereof capable of being appropriately modified.

Furthermore, the water stop packing 26 can be integrally molded to the mouth forming member 14 so as to be non-removable. In this case, it is possible to prevent liquid and dirt from entering between the water stop packing 26 and the mouth forming member 14, maintaining hygiene.

As illustrated in Figs. 1 to 5, the lid 10 includes a rotating member 27 and a cap member 28 made of heat-resistant resin.

The rotating member 27 is rotatably attached at its base end via the first hinge part 9 and has a circular ring-shaped ring part 27a molded with part of its inner peripheral surface (two places in the front-rear direction in the present embodiment) formed in a concave cross-sectional shape at its tip end.

The cap member 28 has a substantially cylindrical peripheral wall part 28a, a top wall part 28b covering the upper part of the peripheral wall part 28a, and a convex ring part 28c intermittently protruding all around the outer peripheral part of the lower end of the peripheral wall part 28a. The cap member 28 is rotatably attached around its central axis by being engaged with the convex ring part 28c fitted inside the ring part 27a.

Additionally, since the convex ring part 28c has a smaller vertical width than the concave cross-sectional vertical width of the ring part 27a, the cap member 28 can slide vertically relative to the rotating member 27. Furthermore, the cap member 28 can be moved so as to tilt its lower end slightly in the circumferential direction relative to the ring part 27a (rotating member 27).

The cap member 28 is attached to the nozzle part 17 detachably by screwing, opening and closing the liquid outlet 17a of the nozzle part 17. Therefore, a second female screw part 29 is provided on the inner peripheral surface of the peripheral wall part 28a (cap member 28). In contrast, a second male screw part 30, which engages with the second female screw part 29, is provided on the outer peripheral surface of the nozzle part 17.

As described above, the cap member 28 can slide vertically relative to the rotating member 27, and further, can be moved so as to tilt the lower end of the cap member 28 slightly in the circumferential direction. Thus, when the lid 10 is in the closed position and the second female screw part 29 and the second male screw part 30 are engaged, the cap member 28 can rotate in a horizontal position, allowing smooth screwing without concern for the rotating member 27.

In the cap unit 1 of the present embodiment, as illustrated in Figs. 1 and 2, when the cap member 28 (lid 10) is in a state in which the liquid outlet 17a of the nozzle part 17 is closed, the rotating member 27 covers the operation part 19a of the locking member 19.

Thus, when the cap member 28 (lid 10) is in a state in which the liquid outlet 17a of the nozzle part 17 is closed, the locking member 19 cannot be operated, so the mouth forming member 14 does not come off the outer cylinder member 13. This ensures that the mouth forming member 14 does not come off unintentionally, providing peace of mind.

As illustrated in Figs. 1 to 5, 16, and 17(A), (B), a lid packing 31 is detachably attached to the lid 10.

The lid packing 31 is a stopper-shaped sealing member for sealing the tip side (liquid outlet 17a) of the nozzle part 17. The lid packing 31 is made of an elastic material, which can be the same material as the abovementioned water stop packing 26 or similar.

The lid packing 31 has a substantially cylindrical shaft part 31a, a stopper part 31b protruding all around in the radial direction from the lower end of the shaft part 31a, and a protrusion 31c protruding downward from the central part of the stopper part 31b.

In contrast, the cap member 28 (lid 10) has a hole part 28d penetrating the central part of the top wall part 28b. Furthermore, on the lower end of the hole part 28d, a circular convex part 28e protruding downward from the top wall part 28b is provided all around the hole part 28d.

The shaft part 31a has a widened end all around. Moreover, the hole part 28d has a reduced diameter portion 28f with the smallest diameter halfway up the upper side.

The lid packing 31 is attached to the inner lower surface (lower surface of the top wall part 28b) of the cap member 28 by inserting the shaft part 31a into the hole part 28d from below, fitting the widened portion of the shaft part 31a into the reduced diameter portion 28f of the hole part 28d.

Note that the shaft part 31a needs to have a certain degree of rigidity so that the shaft part 31a can be inserted into the hole part 28d. Therefore, the lid packing 31 is preferably a solid member without a cavity inside the shaft part 31a. In contrast, the lid packing 31 can also be hollow inside the shaft part 31a in order to reduce material and weight. In this case, it is necessary to select a material with appropriate hardness in order to ensure rigidity.

Additionally, since the lid packing 31 is attached to the inner lower surface of the cap member 28 via the hole part 28d, the top surface of the shaft part 31a can be visually checked from the outside on a surface substantially flush with the top wall part 28b, even when the cap member 28 (lid 10) has closed the liquid outlet 17a of the nozzle part 17. This makes it easy to confirm that the lid packing 31 has not been forgotten to be installed.

The protrusion 31c can enter the inside of the nozzle part 17 from the liquid outlet 17a and protrudes downward so as to be pinchable with the fingers. Additionally, the protrusion 31c is formed in a flat shape for easy pinching with the fingers.

Furthermore, at the tip (lower end) of the protrusion 31c, the long side of the flat shape is provided with a flange part 31d protruding in the radial direction. The flange part 31d functions as a slip stopper and finger grip when the protrusion 31c is pinched with the fingers.

Additionally, the lower end of the protrusion 31c is positioned above the lower end of the cap member 28 and below the central axis of the first hinge part 9. If the protrusion 31c is too long, it becomes difficult to introduce it into the nozzle part 17 when the lid 10 is in the closed position, while if it is too short, it becomes difficult to pinch.

In the cap unit 1 of the present embodiment, when the cap member 28 (lid 10) is in a state in which the liquid outlet 17a of the nozzle part 17 is closed, the stopper part 31b is in close contact with the periphery of the tip side of the nozzle part 17.

Here, the stopper part 31b has a hemispherical shape with a convex bottom along with an upper rib 31e projecting upward in a concentric circle on its upper side. When the lid packing 31 is attached to the inner lower surface of the cap member 28 via the hole part 28d, the circular convex part 28e is inserted into the valley between the shaft part 31a and the upper rib 31e.

Therefore, when the stopper part 31b is in close contact with the periphery of the tip side of the nozzle part 17, the stopper part 31b is pressed from above by the circular convex part 28e and the upper end of the upper rib 31e contacts the lower surface of the top wall part 28b.

This makes it difficult for the center side (protrusion 31c side) of the stopper part 31b to elastically deform upward, with only the outer periphery side of the stopper part 31b in contact with the tip side of the nozzle part 17 capable of elastically deforming and flexing.

Thus, the stopper part 31b has a reduced effective flex length and is pressed from above by the circular convex part 28e and from below by the tip side of the nozzle part 17, resulting in stronger close contact with the periphery of the tip side of the nozzle part 17.

This ensures reliable sealing of the tip side (liquid outlet 17a) of the nozzle part 17 via the lid packing 31.

In contrast, with the cap unit 1 of the present embodiment, it is possible to easily remove the lid packing 31 from the inside of the cap member 28 (lid 10) by pulling the protrusion 31c downward while pinching it.

Furthermore, in the cap unit 1 of the present embodiment, it is possible to easily attach the lid packing 31 to the inner lower surface (lower surface of the top wall part 28b) of the cap member 28 (lid 10) by pushing it upward from the lower side of the cap member 28 while pinching the abovementioned protrusion 31c of the lid packing 31.

Additionally, the lid packing 31 removed from the cap member 28 (lid 10) can be washed separately from the cap member 28 (lid 10), ensuring hygienic maintenance between the lid packing 31 and the cap member 28 (lid 10).

As illustrated in Figs. 1 to 3, the handle member 12 is a partially open ring-shaped member and is rotatably attached to the outer cylinder member 13 (cap body 8) via a second hinge part 11 provided on the rear side surface (peripheral wall part 13a) of the outer cylinder member 13.

Thus, in the capped container 100 equipped with the cap unit 1 of the present embodiment, it is possible to carry the container while holding the handle member 12.

In the capped container 100 equipped with the cap unit 1 of the present embodiment having the above configuration, the cap body 8 is attached to the abovementioned container body 2 and a description of the mouth detachment mechanism 18, in a state in which the cap member 28 (lid 10) has opened the liquid outlet 17a of the nozzle part 17, will be provided.

As illustrated in Fig. 6, in the state in which the cap body 8 is attached to the container body 2, when the locking member 19 (mouth detachment mechanism 18) is slid to the unlock position on the other side (rear side) in the sliding direction, the rear end of the cover part 19b, which is part of the locking member 19, comes into contact with the inner surface of the mouth neck 2c of the container body 2. At this time, the rear end of the cover part 19b comes into contact with the inner surface of the mouth neck 2c of the container body 2 before the locked state between the second locking part 22 and the second locked part 24 is released.

Thus, it is possible to prevent the locking member 19 from sliding upon an erroneous sliding operation of the locking member 19, preventing the locking state of the mouth forming member 14 from being released relative to the outer cylinder member 13 (cap body 8) and preventing the mouth forming member 14 from coming off.

Additionally, it is possible to prevent the mouth forming member 14 from coming off the outer cylinder member 13 (cap body 8) upon an erroneous sliding operation of the locking member 19 due to the impact of a drop if the capped container 100 is dropped.

Further, in the cap unit 1 of the present embodiment, since there is no need to separately provide a locking mechanism to prevent the sliding of the locking member 19 as described above, it is possible to make the mouth detachment mechanism 18 a space-saving simple structure without increasing the number of parts.

Additionally, since the cover part 19b is exposed on the lower side to cover the inner lower surface (lower surface of the upper wall part 13c) of the cap body 8, the internal structure of the mouth detachment mechanism 18 including the biasing member 20 is not visible from the outside, enhancing the appearance.

As described above, with the capped container 100 equipped with the cap unit 1 of the present embodiment, since it is possible to prevent the locking member 19 from sliding in the abovementioned mouth detachment mechanism 18 upon an erroneous sliding operation of the locking member 19 while having a simple structure, further improved usability can be achieved.

Note that the present invention is not necessarily limited to the above embodiment, with various modifications capable of being made without departing from the spirit of the present invention.

For example, in the above embodiment, the cap unit 1 provided with the mouth forming member 14 provided by the nozzle part 17 that forms the abovementioned liquid outlet 17a is exemplified; however, the mouth forming member 14 is not limited to such a configuration and can also be a configuration in which a liquid outlet is provided at the bottom of a mouth forming member that forms a drinking or pouring mouth, for example.

In the above embodiment, the cap unit 1 provided with the cap member 28 (lid 10) detachably attached to the abovementioned nozzle part 17 by screwing is exemplified; however, it is not limited to such a configuration and can also be a configuration in which the lid that opens and closes a liquid outlet is rotatably attached to the cap body via a hinge part and may be provided with a lid locking mechanism that fixes the lid to the cap body, for example.

Note that the above embodiment exemplifies the case in which the present invention is applied to a beverage container with heat and cold insulation functions using the container body 2 having the above-described vacuum insulation structure; however, the present invention can be widely applied to a capped container provided with a container body and a cap unit detachably attached to the container body.

### Reference Signs List

1...cap unit, 2...container body, 8...cap body, 9...first hinge part, 10...lid, 13...outer cylinder member, 14...mouth forming member, 17...nozzle part, 17a...liquid outlet, 18...mouth detachment mechanism, 19...locking member, 20...biasing member, 21...first locking part, 22...second locking part, 23....first locked part, 24....second locked part, 26.... water stop packing, 27....rotating member, 28....cap member, 31... lid packing, 100...capped container

## Claims

1. A cap unit (1) detachably attached to a container body (2) with an upper opening, comprising:
a cap body (8) that closes the upper opening of the container body and has an opening at the top;
a mouth forming (14) attached around the opening of the cap body and provided with a liquid outlet (17a) that communicates with the inside of the container body; and
a mouth detachment mechanism (18) that detachably attaches the mouth forming member around the opening of the cap body,
**characterized in that** the mouth detachment mechanism has a locking member (19) slidably attached to the cap body, along with a biasing member (20) that biases the locking member (19) toward one side in the sliding direction,
wherein, in a state in which the cap body (8) is detached from the container body (2), the locking state of the mouth forming member (14) relative to the cap body is released by sliding the locking member (19) toward the other side in the sliding direction against the biasing force of the biasing member (20) allowing the mouth forming member to be detached from around the opening of the cap body, and
wherein, in a state in which the cap body is attached to the container body, sliding of the locking member toward the other side is prevented by a part of the locking member abutting the container body during the sliding operation of the locking member (19).

2. The cap unit according to claim 1, wherein the locking member has an operation part facing the upper surface of the cap body and a cover part covering the lower surface inside the cap body, including the biasing member, and
wherein said part of the locking member, which is abutting the container body during the sliding operation of the locking member, is the cover part.

3. The cap unit according to claim 2, wherein the operation part is positioned inside a cutout recess that is cut out around the opening of the cap body.

4. The cap unit according to any preceding claim, wherein the cap body has a pair of guide parts and a pair of stopper parts on the lower surface inside the cap body, and
wherein the locking member has a pair of fitting parts slidably fitted to the pair of guide parts and a pair of retaining parts that abut the pair of stopper parts on one side in the sliding direction.

5. The cap unit according to any preceding claim, wherein the cap body has an upper wall part in which the opening is formed, a stepped part that recesses around the opening of the upper wall part, and a cutout recess that cuts out a part of the stepped part along the sliding direction of the locking member, and
wherein the locking member is positioned inside the cutout recess and has an operation part facing the upper surface of the cap body from the stepped part.

6. A capped container comprising: the cap unit according to any one of claims 1 to 5; and a container body to which the cap unit is attached.

## Patentansprüche

1. Kappeneinheit (1), die abnehmbar an einem Behälterkörper (2) mit einer oberen Öffnung angebracht ist, umfassend:
einen Kappenkörper (8), der die obere Öffnung des Behälterkörpers verschließt und eine Öffnung an der Oberseite aufweist:
ein mündungsbildendes Element (14), das um die Öffnung des Kappenkörpers herum angebracht und mit einem Flüssigkeitsauslass (17a) bereitgestellt ist, der mit dem Inneren des Behälterkörpers in Verbindung steht; und
einen Mundablösemechanismus (18), der das mündungsbildende Element um die Öffnung des Kappenkörpers herum abnehmbar anbringt,
**dadurch gekennzeichnet, dass** der Mundablösemechanismus ein Verriegelungselement (19) aufweist, das verschiebbar an dem Kappenkörper angebracht ist, zusammen mit einem Vorspannelement (20), das das Verriegelungselement (19) in der Verschieberichtung zu einer Seite hin vorspannt,
wobei in einem Zustand, in dem der Kappenkörper (8) von dem Behälterkörper (2) gelöst ist, der Verriegelungszustand des mündungsbildenden Elements (14) relativ zu dem Kappenkörper durch Verschieben des Verriegelungselements (19) zu der anderen Seite in der Verschieberichtung gegen die Vorspannkraft des Vorspannelements (20) gelöst wird, was es dem mündungsbildenden Element ermöglicht, von der Öffnung des Kappenkörpers gelöst zu werden, und
wobei in einem Zustand, in dem der Kappenkörper an dem Behälterkörper befestigt ist, ein Verschieben des Verriegelungselements in Richtung der anderen Seite durch einen Teil des Verriegelungselements verhindert wird, der während des Verschiebevorgangs des Verriegelungselements (19) an dem Behälterkörper anliegt.

2. Kappeneinheit nach Anspruch 1, wobei das Verriegelungselement einen der oberen Fläche des Kappenkörpers zugewandten Betätigungsteil und einen die untere Fläche im Inneren des Kappenkörpers abdeckenden Abdeckteil aufweist, einschließlich des Vorspannelements, und
wobei der Teil des Verriegelungselements, der während des Verschiebevorgangs des Verriegelungselements an dem Behälterkörper anliegt, der Abdeckteil ist.

3. Kappeneinheit nach Anspruch 2, wobei das Betätigungsteil innerhalb einer Ausnehmung angeordnet ist, die um die Öffnung des Kappenkörpers herum ausgeschnitten ist.

4. Kappeneinheit nach einem der vorhergehenden Ansprüche, wobei der Kappenkörper ein Paar von Führungsteilen und ein Paar von Anschlagteilen auf der unteren Fläche im Inneren des Kappenkörpers aufweist, und
wobei das Verriegelungselement ein Paar von Beschlagteilen, die gleitend an dem Paar von Führungsteilen angebracht sind, und ein Paar von Halteteilen aufweist, die auf einer Seite in der Verschieberichtung an dem Paar von Anschlagteilen anliegen.

5. Kappeneinheit nach einem der vorhergehenden Ansprüche, wobei der Kappenkörper einen oberen Wandteil, in dem die Öffnung ausgebildet ist, einen gestuften Teil, der um die Öffnung des oberen Wandteils herum ausgenommen ist, und eine Ausnehmung aufweist, die einen Teil des gestuften Teils entlang der Verschieberichtung des Verriegelungselements ausschneidet, und
wobei das Verriegelungselement innerhalb der Ausnehmung positioniert ist und einen Betätigungsteil aufweist, der der oberen Fläche des Kappenkörpers von dem abgestuften Teil aus zugewandt ist.

6. Behälter mit Verschlusskappe, umfassend: die Kappeneinheit nach einem der Ansprüche 1 bis 5; und einen Behälterkörper, an dem die Kappeneinheit angebracht ist.

## Revendications

1. Unité (1) de capuchon fixée de manière détachable à un corps (2) de récipient avec une ouverture supérieure, comprenant :
un corps (8) de capuchon qui ferme l'ouverture supérieure du corps de récipient et présente une ouverture en haut :
une formation d'embouchure (14) fixée autour de l'ouverture du corps de capuchon et dotée d'une sortie (17a) de liquide qui communique avec l'intérieur du corps de récipient ; et
un mécanisme (18) de détachement d'embouchure qui fixe de manière détachable l'organe de formation d'embouchure autour de l'ouverture du corps de capuchon,
**caractérisée en ce que** le mécanisme de détachement d'embouchure présente un organe (19) de verrouillage fixé de manière coulissante au corps de capuchon, ainsi qu'un organe (20) de sollicitation qui sollicite l'organe de (19) verrouillage vers un côté dans la direction de coulissement,
dans laquelle, dans un état dans lequel le corps (8) de capuchon est détaché du corps (2) de récipient, l'état de verrouillage de l'organe (14) de formation d'embouchure par rapport au corps de capuchon est relâché en faisant coulisser l'organe (19) de verrouillage vers l'autre côté dans la direction de coulissement contre la force de sollicitation de l'organe (20) de sollicitation permettant de détacher l'organe de formation d'embouchure autour de l'ouverture du corps de capuchon, et
dans laquelle, dans un état dans lequel le corps de capuchon est fixé au corps de récipient, le coulissement de l'organe de verrouillage vers l'autre côté est empêché par une partie de l'organe de verrouillage en butée contre le corps de récipient pendant l'opération de coulissement de l'organe (19) de verrouillage.

2. Unité de capuchon selon la revendication 1, dans laquelle l'organe de verrouillage présente une partie d'opération faisant face à la surface supérieure du corps de capuchon et une partie de recouvrement recouvrant la surface inférieure à l'intérieur du corps de capuchon, incluant l'organe de sollicitation, et
dans laquelle ladite partie de l'organe de verrouillage, qui est en butée contre le corps de récipient pendant l'opération de coulissement de l'organe de verrouillage, est la partie de recouvrement.

3. Unité de capuchon selon la revendication 2, dans laquelle la partie d'opération est positionnée à l'intérieur d'un évidement de découpe découpé autour de l'ouverture du corps de capuchon.

4. Unité de capuchon selon une quelconque revendication précédente, dans laquelle le corps de capuchon présente une paire de parties de guidage et une paire de parties de butée sur la surface inférieure à l'intérieur du corps de capuchon, et
dans laquelle l'organe de verrouillage présente une paire de parties d'ajustement montées de manière coulissante sur la paire de parties de guidage et une paire de parties de retenue qui viennent en butée de la paire de parties de butée d'un côté dans la direction de coulissement.

5. Unité de capuchon selon une quelconque revendication précédente, dans laquelle le corps de capuchon présente une partie de paroi supérieure dans laquelle l'ouverture est formée, une partie étagée qui s'enfonce autour de l'ouverture de la partie de paroi supérieure, et un évidement de découpe qui découpe une partie de la partie étagée le long de la direction de coulissement de l'organe de verrouillage, et
dans laquelle l'organe de verrouillage est positionné à l'intérieur de l'évidement de découpe et présente une partie d'opération orientée vers la surface supérieure du corps de capuchon à partir de la partie étagée.

6. Récipient à capuchon comprenant : l'unité de capuchon selon l'une quelconque des revendications 1 à 5 ; et un corps de récipient auquel l'unité de capuchon est fixée.
